# FASCICULE DE BREVET EUROPEEN

(11) **EP 3 033 179 B1**
(45) Date de publication et mention de la délivrance du brevet: **11.04.2018**
(21) Numéro de dépôt: 14750373.4
(22) Date de dépôt: 12.08.2014
(51) Int. Cl.: B05B 7/08, B05B 5/03, B05B 7/06, B05B 7/10, F16N 7/32, B21D 22/20, B05B 5/08, B05B 13/02

(54) **PULVERISATEUR D'UN PRODUIT LUBRIFIANT ET INSTALLATION DE LUBRIFICATION COMPRENANT CE PULVERISATEUR**
ZERSTÄUBER FÜR SCHMIERMITTEL UND SCHMIERANLAGE MIT DIESEM ZERSTÄUBER
ATOMIZER FOR ATOMIZING A LUBRICATING PRODUCT AND LUBRICATING SYSTEM COMPRISING THIS ATOMIZER

(30) Priorité: 13.08.2013 FR 1357990
(43) Date de publication de la demande: 22.06.2016
(73) Titulaire: SAMES KREMLIN, 38240 Meylan (FR)
(72) Inventeur: DI GIOIA, Michel, F-38170 Seyssinet Pariset (FR); GOISOT, Gilles, F-38330 Saint Ismier (FR); VEDOVATI, Benoit-Marc, F-38220 Vizille (FR)
(74) Mandataire: Lavoix
(86) Numéro de dépôt international: PCT/EP2014/067254
(87) Numéro de publication internationale: WO 2015/022330

(56) Documents cités:
- EP-A2- 0 818 243
- WO-A1-99/33554
- DE-A1- 3 724 234
- DE-A1- 10 254 354
- FR-A- 1 490 206
- FR-A1- 2 483 265
- US-A1- 2007 102 841
- US-A1- 2012 227 770

## Description

L'invention concerne un pulvérisateur destiné à la pulvérisation d'un lubrifiant sur une pièce, notamment par voie électrostatique.

L'invention trouve une application dans le domaine de la lubrification de pièces, telles que, par exemple, des feuilles de métal destinées à être formées par emboutissage, matriçage ou encore découpe. Dans ce type de procédé, les feuilles de métal doivent être lubrifiées afin de prévenir toute forme d'échauffement, de grippage, collage ou arrachement de matière. Ainsi, l'outil de formage et/ou la feuille de métal, sont enduits de lubrifiant au moyen d'un pulvérisateur de type pneumatique ou encore d'un rouleau d'enduction. Dans une installation de lubrification d'une pièce, un pulvérisateur comprend le plus souvent une buse à l'intérieure de laquelle est disposée une aiguille qui régule le débit du lubrifiant, le lubrifiant étant projeté par la buse selon un axe de pulvérisation.

Dans un procédé de lubrification électrostatique, le pulvérisateur est muni d'une électrode installée à l'intérieur de la buse et qui est au contact du lubrifiant afin que celui-ci soit chargé électrostatiquement. Un champ électrostatique est créé entre la pièce à lubrifier, mise à la terre, et le pulvérisateur. Ce champ électrostatique permet de guider les particules de lubrifiant, elles même chargées électrostatiquement, suivant une même polarité à partir du pulvérisateur jusqu'à la pièce.

Actuellement, la précision des outils de pulvérisation est approximative. Le rendement de ces outils de pulvérisation est faible puisqu'il est nécessaire de pulvériser des quantités de lubrifiant importantes afin d'obtenir une pièce parfaitement lubrifiée. En réalité, une proportion assez faible, d'environ 5%, de lubrifiant pulvérisé est réellement efficace. Cela conduit à des ambiances de travail dangereuses avec un risque d'incendie plus important et un sol glissant. Cela implique aussi que les ateliers de lubrification sont peu salubres. Ainsi, un opérateur peut inhaler des aérosols d'huile et développer des allergies ou des maladies. L'Organisation Mondiale de la Santé considère d'ailleurs que l'inhalation et/ou le contact avec des lubrifiants constitue la première ou la seconde cause de cancers professionnels dans le monde. Il convient en outre de nettoyer les pièces obtenues au terme du procédé d'emboutissage, matriçage ou découpe et induit donc une sur-consommation de solvant pour le nettoyage et une sur-consommation d'énergie pour le séchage des pièces.

De plus, les pulvérisateurs sont actuellement capables de produire un débit de l'ordre de 80 centimètres cube par minute (cm³/min). Or, il est aujourd'hui intéressant pour certaines applications, de pouvoir lubrifier une pièce avec un très faible débit, c'est-à-dire inférieur à 1 cm³/min, et ce type de débit est actuellement impossible à obtenir par les pulvérisateurs du marché.

A titre d'exemple, US-A-2007/0102841 divulgue un pulvérisateur comprenant une buse, qui est centrée sur un axe de pulvérisation et un noyau, qui est disposé coaxialement à l'intérieur de la buse. Le noyau est traversé par plusieurs conduits de passage de liquide, qui débouchent dans un volume annulaire centré sur l'axe de pulvérisation et permettant d'éjecter une lame de liquide tubulaire. Des trous de passage d'un gaz, comme de l'air, traversent la buse et sont agencés autour du passage de liquide, de telle sorte qu'ils forment une lame d'air tourbillonnante, ou « vortex », ayant une direction hélicoïdale autour de l'axe de pulvérisation.

Ce pulvérisateur n'est pas conçu pour produire un très faible débit et proposer une grande finesse de pulvérisation.

C'est à ces inconvénients qu'entend plus particulièrement remédier l'invention en proposant un pulvérisateur permettant de diffuser le lubrifiant à un faible débit et avec une très grande finesse de pulvérisation.

A cet effet, l'invention concerne un pulvérisateur d'un produit lubrifiant selon un axe de pulvérisation, comprenant un premier passage du produit qui est centré sur l'axe de pulvérisation, une buse, qui est centrée sur l'axe de pulvérisation, un noyau qui est disposé coaxialement à l'intérieur de la buse, et un deuxième passage d'éjection d'une première lame d'air, qui est agencé autour du premier passage suivant une direction périphérique à l'axe de pulvérisation, et qui, en fonctionnement, confère à la première lame d'air une direction hélicoïdale. Conformément à l'invention, le premier passage est défini entre le noyau et la buse et est formé par plusieurs sections de passage disjointes. Le pulvérisateur comprend, en outre, une bague qui enserre, au moins en partie, le noyau, alors que les sections de passage du produit lubrifiant sont formées par des rainures s'étendant axialement sur la périphérie du noyau ou à l'intérieur de la bague.

Grâce à l'invention, les sections de passage disjointes diffusent le lubrifiant avec un très faible débit, ce qui améliore le rendement de pulvérisation et réduit la quantité d'huile nécessaire à la lubrification d'une pièce.

Selon des aspects avantageux mais non obligatoires de l'invention, un pulvérisateur électrostatique peut incorporer une ou plusieurs des caractéristiques suivantes, prises dans toute combinaison techniquement admissible:
- Les sections de passage ont une dimension radiale inférieure à 0.5 mm et de préférence de l'ordre de 0.2 mm.
- Les sections de passage du lubrifiant sont régulièrement réparties autour de l'axe de pulvérisation.
- Les sections de passage sont triangulaires.
- Le pulvérisateur comprend un troisième passage d'éjection d'une deuxième lame d'air, qui est disposé entre la bague et la buse.
- Le troisième passage est tubulaire de manière que, en fonctionnement, il confère à la deuxième lame d'air une direction axiale.
- Le deuxième passage de l'air est formé par des trous qui sont régulièrement répartis autour de l'axe et qui, en fonctionnement, confèrent à la première lame d'air une direction comprenant une composante axiale et une composante orthoradiale à l'axe de pulvérisation.
- Le pulvérisateur comprend en outre un élément électriquement conducteur disposé au contact du produit lubrifiant et mis sous tension en fonctionnement du pulvérisateur.

L'invention concerne également une installation de lubrification d'une pièce, comprenant une enceinte de confinement, un bloc d'alimentation en produit lubrifiant, un coffret de commande électropneumatique et au moins un pulvérisateur caractérisée en ce que le pulvérisateur est comme décrit précédemment.

Avantageusement, le bloc d'alimentation en produit lubrifiant est équipé d'une vanne de coupure sélective, à fréquence comprise entre 10 et 200 Hz de l'alimentation du pulvérisateur.

L'invention sera mieux comprise et d'autres avantages de celle-ci apparaîtront plus clairement à la lumière de la description qui va suivre d'un mode de réalisation d'un pulvérisateur conforme à son principe, donnée uniquement à titre d'exemple et faite en se référant aux dessins annexés dans lesquels :
- la figure 1 est un schéma d'ensemble d'une installation de lubrification par voie électrostatique conforme à l'invention,
- la figure 2 est une vue en perspective d'un pulvérisateur modulaire conforme à l'invention et appartenant à l'installation de la figure 1 associé à un bloc mère,
- la figure 3 est une vue selon la flèche III de la figure 2,
- la figure 4 est une coupe selon la ligne IV-IV de la figure 3,
- la figure 5 est une coupe selon la ligne V-V de la figure 3,
- la figure 6 est une vue à plus grande échelle de l'encadré VI de la figure 5,
- la figure 7 est une vue à plus grande échelle de l'encadré VII de la figure 2,
- la figure 8 est une coupe selon la ligne VIII-VIII de la figure 3,
- la figure 9 est une vue en élévation d'un corps du module de pulvérisation de la figure 2, et
- la figure 10 est une coupe selon la ligne X-X de la figure 9.

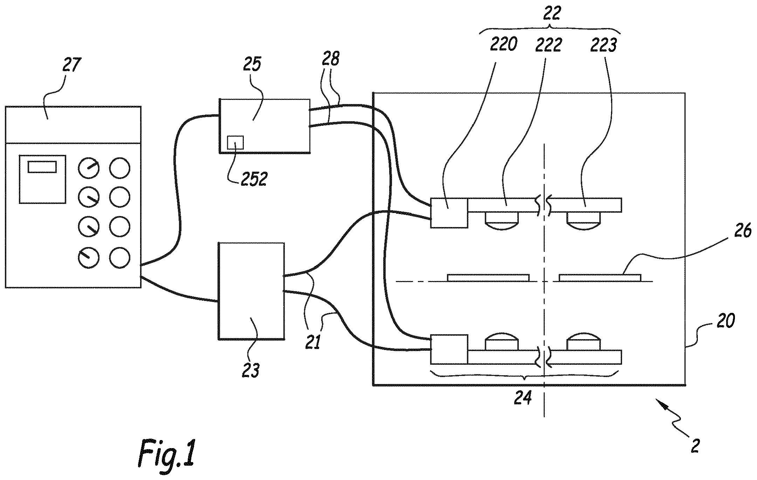

Sur la figure 1 est représentée une installation 2 de lubrification d'une pièce par voie électrostatique. Dans cet exemple, on utilise de l'huile comme lubrifiant. L'installation 2 comprend une enceinte de confinement 20 qui permet d'assainir l'environnement dans les ateliers, de récupérer et recycler intégralement le lubrifiant qui n'aurait pas atteint la ou les pièces à traiter. A cet effet, l'installation 2 comprend un tuyau non représenté, permettant de drainer le lubrifiant resté à l'intérieur de l'enceinte de confinement 20 vers l'extérieur. Cette enceinte 20 prévient en plus de toute pollution extérieure et facilite le transport des gouttelettes d'huile.

A l'intérieur de l'enceinte de confinement 20, sont disposées plusieurs pièces 26 destinées à être lubrifiées. En pratique, les pièces 26 effectuent un trajet selon une direction perpendiculaire au plan de la figure 1 et selon lequel plusieurs types de pulvérisateur sont installés. Par exemple, un pulvérisateur à eau peut être utilisé pour refroidir les outils de conformation et un pulvérisateur de peinture liquide ou de vernis peut ensuite être utilisé pour revêtir la pièce d'une couche de peinture ou de vernis. En variante non représentée, une seule pièce large traverse l'installation 2.

Au dessus et en dessous des pièces 26 sont disposés deux pulvérisateurs modulaires 22 et 24. Un pulvérisateur modulaire est un pulvérisateur qui comprenant plusieurs modules tous alimentés par une même ligne d'alimentation. Dans la suite de la description est détaillé uniquement le pulvérisateur 22 dans la mesure où les pulvérisateurs 22 et 24 sont identiques.

Le pulvérisateur modulaire 22 comprend deux modules 222 et 223 et un bloc mère 220. Le bloc mère 220 est un bloc qui alimente en lubrifiant et en air les modules 222 et 223 du pulvérisateur 22. En pratique, un ensemble de pulvérisation peut contenir jusqu'à cinq modules et deux ensembles de pulvérisation incluent donc dix modules qui permettent de pulvériser du lubrifiant sur une pièce 26 de longueur égale à environ 1 mètre. Le bloc mère 220 est donc relié par des tuyaux 28 à un bloc 25 d'alimentation en lubrifiant. Par ailleurs, le bloc mère 220 est également relié par des câbles électriques 21 à une unité de production de haute tension 23. Cela permet de porter le lubrifiant à haute tension. L'unité de production de la haute tension 23 et le bloc d'alimentation 25 en produit et en air sont chacun reliés à un coffret de commande électropneumatique 27.

Le coffret 27 est raccordé pneumatiquement aux pulvérisateurs 22 et 24, au moyen de tuyaux d'air non représentés.

Sur le schéma de la figure 1, le bloc mère 220 comporte uniquement une prise d'entrée du tuyau 28 et une prise d'entrée du câble 21, alors qu'en réalité celui-ci comporte en outre une prise d'alimentation en air. En effet, un pulvérisateur de ce type est conçu pour avoir un débit d'huile en sortie du pulvérisateur très faible, par exemple inférieur à 1cm3/mn. Ainsi, la vitesse de l'huile en sortie est trop faible pour former un jet ayant une longueur suffisante pour atteindre la pièce. C'est pourquoi on utilise un premier circuit d'injection d'air qui débouche en sortie sur un passage venant coiffer la sortie d'huile, afin de décoller et d'accélérer les gouttelettes d'huile arrivant en sortie du pulvérisateur. Le fait de pulvériser l'huile sous forme de gouttelettes permet d'obtenir un impact plus précis et un rendement amélioré.

L'installation 2 comprend en outre un système de régulation de débit de produit et d'air, non représenté sur la figure 1 mais qui est situé en amont du bloc 25 d'alimentation en produit et en air. Le système de régulation de débit permet de réduire la consommation d'huile et d'effectuer une correction en fonction de la température à laquelle s'effectue le procédé de lubrification.

Par ailleurs, un champ électrostatique est établi entre le pulvérisateur 22 et les pièces 26 à traiter qui sont mises à la terre. En effet, les pressions d'air de pulvérisation étant faibles, les forces aérauliques ne sont pas suffisantes et leur direction n'est pas forcément bien orientée pour projeter correctement le jet vers les pièces 26 à traiter. C'est pourquoi on utilise un champ électrostatique, qui est protégé par l'enceinte de confinement 20, pour guider les gouttelettes d'huile jusqu'aux pièces 26 à lubrifier. Ce guidage intervient car ces gouttelettes sont chargées suivant une même polarité.

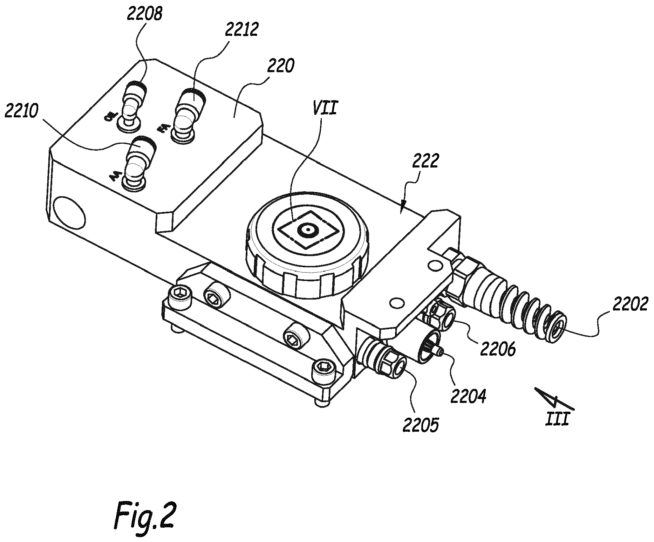

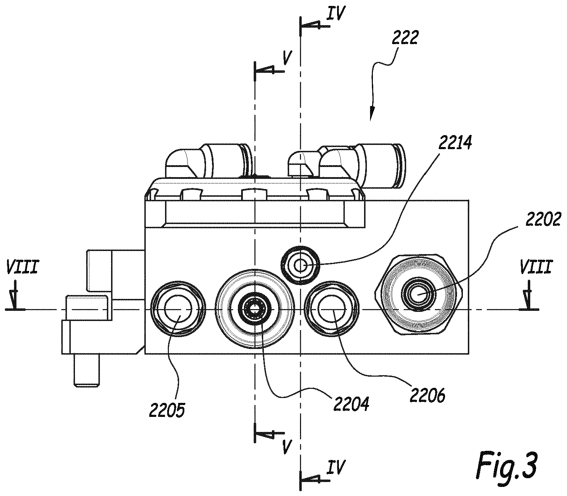

Comme visible aux figures 2 et 3, le bloc mère 220 comprend en entrée, une prise d'alimentation en huile 2208, deux prises d'alimentation en air 2210 et 2212 et une borne d'entrée haute tension 2202. Chaque prise 2210 et 2212 alimente un circuit d'air différent. En sortie du pulvérisateur modulaire 22, sont disposés une borne de sortie haute-tension 2204, une prise de raccordement en huile 2214 et deux prises de raccordement en air 2205 et 2206. Dans le cas présent, ces prises 2204, 2206 et 2214 sont raccordées au second module 223 du pulvérisateur 22. Pour un pulvérisateur avec un seul module, ces prises sont chacune recouvertes d'un bouchon.

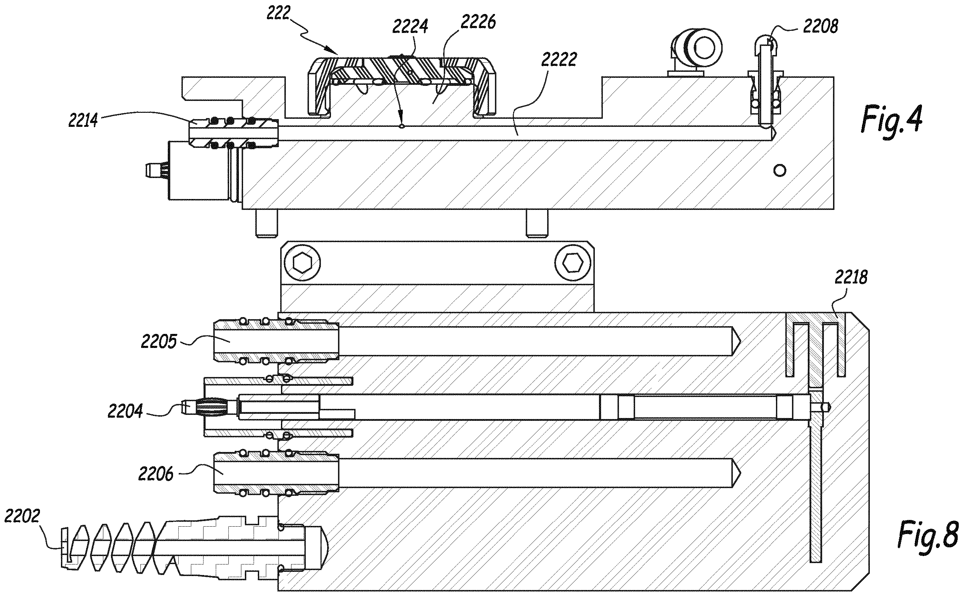

Comme visible à la figure 4, l'huile circule à partir de la prise 2208 puis à travers une ligne d'alimentation 2222 des différents modules du pulvérisateur 22. Au niveau du module 222 on remarque, sur la ligne d'alimentation 2222, la présence d'un trou 2224 qui indique que l'huile circulant dans la ligne est déviée par l'intermédiaire de ce trou 2224 afin d'atteindre le module de pulvérisation 222 par un conduit qui est situé dans un plan différent de celui de la figure 4. La ligne d'alimentation 2222 débouche en sortie sur le second module 223 du pulvérisateur 22, qui n'est pas représenté sur les figures 2 et suivantes, pour la clarté du dessin.

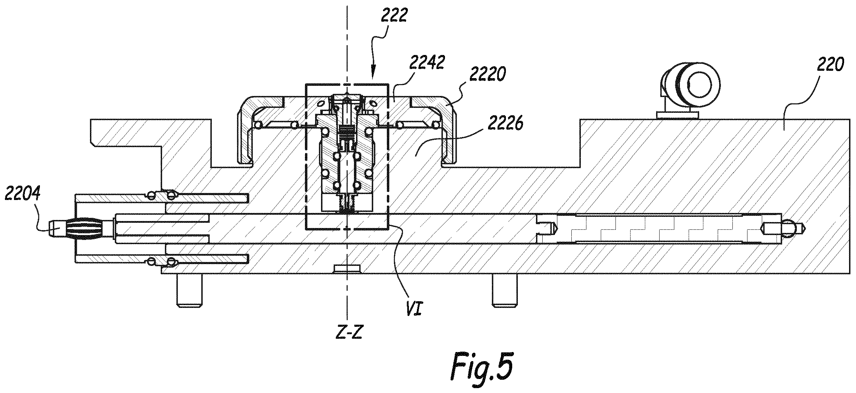

Comme représenté sur la figure 5, le module de pulvérisation 222 s'étend selon un axe Z-Z qui est un axe de pulvérisation du lubrifiant. Ce module 222 comprend une buse 2242 fixée par un écrou 2220 sur un support 2226 du pulvérisateur 22. Ce support 2226 comprend un logement V222 de réception du module 222 du pulvérisateur 22.

Dans la suite de la description, on définit la direction « haut » comme une direction orientée dans le sens de l'injection et la direction « bas » comme une direction orientée dans le sens opposé à l'injection. L'injection se fait donc du bas vers le haut.

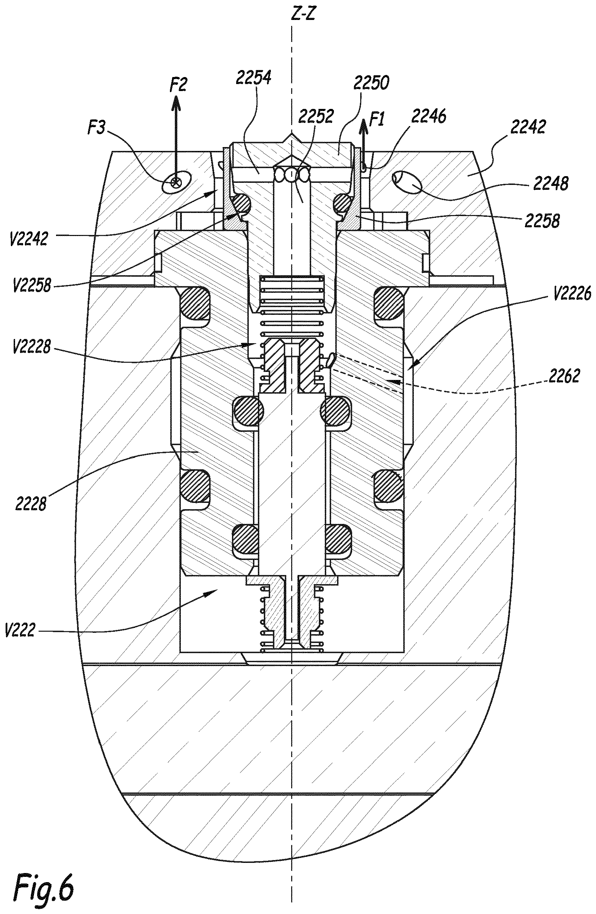

Le module 222 est encastré à l'intérieur du support 2226. A l'intérieur du logement V222 de réception du module 222 est située une chambre d'arrivée d'huile V2226. Un conduit non représenté permet d'acheminer l'huile à partir du trou 2224 de la ligne de distribution 2210 jusqu'à cette chambre V2226. A l'intérieur de cette chambre V2226 est disposé un corps creux 2228. Le volume intérieur du corps 2228 s'étend selon l'axe Z-Z. Des canaux 2262, dont un seul est représenté en pointillés à la figure 6, traversent ce corps creux 2228 radialement à l'axe de pulvérisation Z-Z. L'huile contenue dans la chambre V2226 emprunte donc les canaux 2262 pour traverser le corps creux 2228 et arrive dans une seconde chambre V2228.

Cette seconde chambre V2228 communique avec une cavité 2252 formée dans un noyau 2250 située en haut du module 222. Le noyau 2250 inclut également quatre perçages 2254 traversant la cavité 2252 chacun selon une direction radiale à l'axe de pulvérisation Z-Z. La pression de l'huile est telle que celle-ci remonte par la cavité 2252 et s'échappe à travers les trous 2254.

Autour du noyau 2250 est située une bague d'injection 2258. L'huile arrive donc, à travers les perçages 2254, dans un volume V2258 situé entre la bague d'injection 2258 et le noyau 2250 puis passe entre la bague d'injection 2258 et le noyau 2250. Le noyau 2250 et la bague d'injection 2258 sont des pièces de révolution autour de l'axe Z-Z.

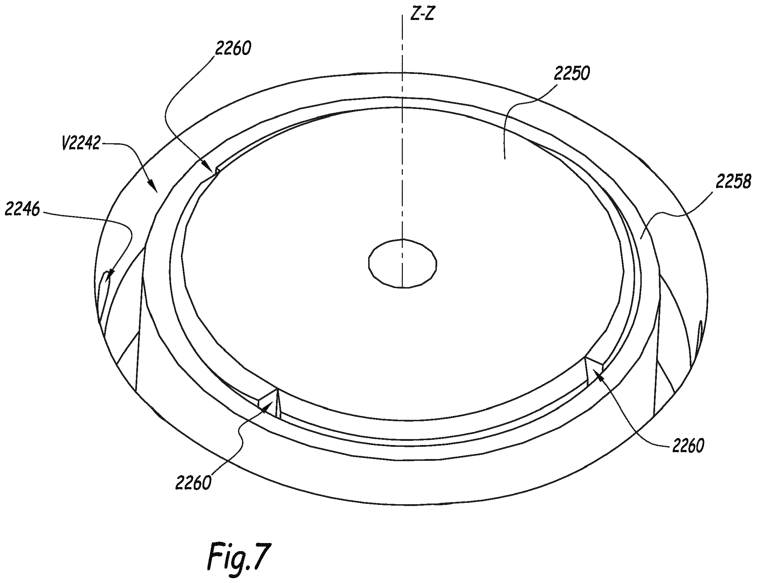

Comme visible à la figure 7, le noyau 2250 comprend quatre rainures 2260 à section triangulaire, qui s'étendent parallèlement à l'axe de pulvérisation Z-Z. La bague 2258 ceinture la partie haute du noyau 2250, ce qui fait que les rainures 2260, dont trois sont visibles à la figure 7, forment des sections de passage disjointes de l'huile et sont régulièrement réparties autour de l'axe Z-Z. La dimension radiale des rainures 2260 est faible, elle est en pratique inférieure à 0.5 mm, de préférence de l'ordre de 0.2 mm et elles ne sont visibles qu'à la figure 7. On obtient ainsi un débit d'huile inférieur à environ 1 cm³/min.

Les sections de passage 2260 constituent ensemble une surface de passage de l'huile autour du noyau 2250, qui est centrée sur l'axe de pulvérisation Z-Z.

En opposition avec un passage de l'huile à travers une surface annulaire complète, le fait d'utiliser une surface de passage interrompue permet de réduire le débit en sortie du module de pulvérisation 222.

Comme cela ressort des figures 6 et 7, le module 222 du pulvérisateur 22 comprend, autour de la bague d'injection 2258, un volume tubulaire V2242 d'éjection d'air qui communique avec des trous 2246 acheminant l'air en provenance de la borne d'entrée 2210. L'air éjecté du volume V2242 forme une lame d'air droite qui coiffe les sections de passage 2260 du lubrifiant. Autrement dit, le volume V2242 est un passage d'éjection d'air selon une direction axiale F1 parallèle à l'axe de pulvérisation Z-Z. Le passage tubulaire V2242 est situé au plus près des sections 2260 de passage du lubrifiant de manière à décoller les gouttes d'huile sortant des rainures 2260 du noyau 2242.

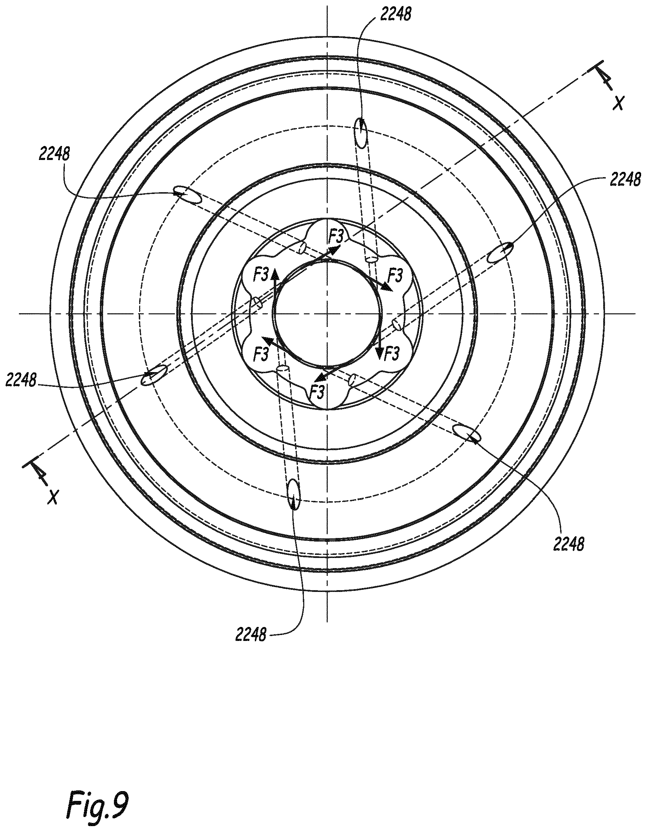

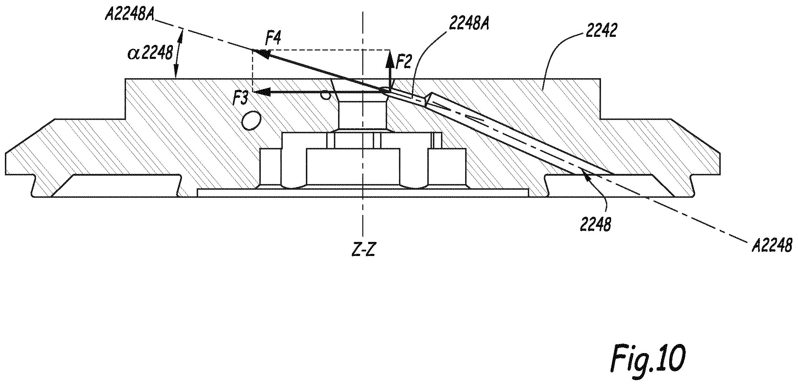

Autour du volume de passage V2242 est ménagé un autre passage d'éjection d'air, qui est formé par plusieurs trous 2248 régulièrement répartis autour de l'axe Z-Z dans la buse 2242. Autrement dit, les trous 2248 forment un passage d'éjection d'air, qui est agencé autour de volume de passage V2242 et autour des sections 2260, suivant une direction périphérique à l'axe de pulvérisation Z-Z. Ces trous 2248 sont mieux visibles aux figures 9 et 10 dans la mesure où seule la buse 2242 est représentée sur ces figures.

Plus précisément, la buse 2242 comprend six trous 2248, qui s'étendent à partir d'une ouverture inférieure jusqu'à une ouverture supérieure. En fonctionnement, l'air est éjecté des trous 2248 selon une direction hélicoïdale F4. En effet, cette direction F4 a une composante axiale F2 qui est parallèle à l'axe Z-Z et une composante F3 qui est othoradiale à l'axe Z-Z de pulvérisation. Les composantes F2 et F3 sont non-nulles. On note α2248 l'angle formé par la direction F4 avec un axe perpendiculaire à l'axe Z-Z, cet angle étant en pratique compris entre 10° et 60°, ci égal à 17°. La valeur de l'angle α2248 détermine l'intensité avec laquelle les gouttelettes sont entrainées en rotation.

En référence à la figure 10, les trous 2248 s'étendent selon un axe A2248 jusqu'à une extrémité 2248A. L'air injecté dans les trous 2248 est donc propulsé en sortie selon un axe A2248A qui correspond à l'axe sur lequel est centrée l'extrémité 2248A. L'axe A2248A est confondu avec la direction F4.

Comme visible sur les figures 9 et 10, tous les jets d'air sortant des trous 2248 ont leur composante othoradiale F3 orientée dans le même sens, ici dans le sens horaire dans le plan de la figure 9.

Les gouttelettes d'huile sont entrainées en rotation autour de l'axe Z-Z par les jets d'air sortant des trous 2248. Les gouttelettes d'huile sont donc pulvérisées selon une direction sensiblement hélicoïdale autour de l'axe Z-Z. On parle d'un jet de type vortex. Le fait de pulvériser l'huile sous forme d'un jet en vortex permet de stabiliser, d'homogénéiser et d'assurer la continuité du jet d'huile. Cela permet en outre de limiter les phénomènes de «rebond » ou « d'overspray » au niveau du jet.

Comme visible à la figure 8, la borne d'entrée de la haute tension 2202 débouche sur un élément électriquement conducteur 2216 qui est un barreau métallique. Bien que cela ne soit pas visible sur les figures, ce barreau 2216 joue le rôle d'une électrode de charge du lubrifiant.

En variante, il est possible d'utiliser un nombre de rainures 2260 différent de quatre.

Selon une autre variante non représentée, le pulvérisateur n'utilise pas de champ électrostatique pour canaliser le jet.

Selon une autre variante non représentée, les rainures 2260 sont usinées avec une section autre qu'une section triangulaire, notamment avec une section semi-circulaire.

Selon une autre variante non représentée, le passage d'éjection d'air destiné à entrainer le lubrifiant en rotation n'est pas formé par des trous 2248 disjoints, mais par une chambre dans laquelle est injecté, à la fois, de l'air selon une direction axiale et de l'air selon une direction orthoradiale. Le mélange de ces deux arrivées d'air résulte en la formation d'une lame d'air tubulaire tourbillonnante. En outre, il est possible d'équiper le pulvérisateur 22 d'un variateur de débit permettant de régler le débit d'air « axial » par rapport au débit d'air « orthoradial ». Ainsi, un débit plus important d'air « axial » offre une meilleure accélération du jet de lubrifiant tandis qu'un débit plus important d'air « radial » offre une meilleure stabilité du jet de lubrifiant.

Selon une autre variante non représentée, le noyau 2250 est dépourvu de rainures 2260 et c'est la bague d'injection 2258 qui comporte des rainures internes définissant les sections de passage de l'huile.

Selon un aspect avantageux de l'invention, et dans le but de réduire le débit de lubrifiant sans modifier plus avant les pulvérisateurs 22 et 24, le bloc d'alimentation 25 incorpore une vanne piézo-électrique 252 qui interrompt sélectivement l'écoulement du lubrifiant en direction des pulvérisateurs, à une fréquence pouvant varier entre 10 et 200 Hz. Ainsi, des trains de lubrifiant, potentiellement variables en fréquence et en durée, sont fournis aux pulvérisateurs 22 et 24.

En variante, la vanne 252 est d'un type autre que piézo-électrique, par exemple pneumatique ou électromagnétique.

## Revendications

1. Pulvérisateur (22) d'un produit lubrifiant selon un axe de pulvérisation (Z-Z), comprenant :
- un premier passage du produit qui est centré sur l'axe de pulvérisation,
- une buse (2242), qui est centrée sur l'axe de pulvérisation (Z-Z),
- un noyau (2250) qui est disposé coaxialement à l'intérieur de la buse,
- un deuxième passage (2248) d'éjection d'une première lame d'air, qui est agencé autour du premier passage suivant une direction périphérique à l'axe de pulvérisation (Z-Z), et qui, en fonctionnement, confère à la première lame d'air une direction hélicoïdale (F4),
**caractérisé en ce que** le premier passage est défini entre le noyau (2250) et la buse (2242) et est formé par plusieurs sections de passage disjointes (2260) et **en ce que** le pulvérisateur comprend, en outre, une bague (2258) qui enserre, au moins en partie, le noyau (2250), les sections de passage (2260) du lubrifiant étant formées par des rainures s'étendant axialement sur la périphérie du noyau ou à l'intérieur de la bague (2258).

2. Pulvérisateur (22) selon la revendication 1, **caractérisé en ce que** les sections de passage (2260) ont une dimension radiale inférieure à 0.5 mm de préférence de l'ordre de 0.2 mm.

3. Pulvérisateur (22) selon l'une des revendications 1 et 2, **caractérisé en ce que** les sections (2260) de passage du produit lubrifiant sont régulièrement réparties autour de l'axe de pulvérisation (Z-Z).

4. Pulvérisateur (22) selon l'une des revendications précédentes, **caractérisé en ce que** les sections de passage (2260) sont triangulaires.

5. Pulvérisateur selon l'une des revendications précédentes, **caractérisé en ce qu'**il comprend un troisième passage (V2242) d'éjection d'une deuxième lame d'air, qui est disposé entre la bague (2258) et la buse (2242)

6. Pulvérisateur selon la revendication 5, **caractérisé en ce que** le troisième passage (V2242) est tubulaire de manière que, en fonctionnement, il confère à la deuxième lame d'air une direction (F1) axiale.

7. Pulvérisateur selon l'une des revendications précédentes, **caractérisé en ce que** le deuxième passage de l'air est formé par des trous (2248) qui sont régulièrement répartis autour de l'axe de pulvérisation (Z-Z) et qui, en fonctionnement, confèrent à la première lame d'air une direction (F4) comprenant une composante (F2) axiale et une composante (F3) orthoradiale à l'axe de pulvérisation (Z-Z).

8. Pulvérisateur (22) selon l'une des revendications précédentes, **caractérisé en ce qu'**il comprend en outre un élément électriquement conducteur (2216) disposé au contact du produit lubrifiant et mis sous tension en fonctionnement du pulvérisateur.

9. Installation (2) de lubrification d'une pièce (26), comprenant :
- une enceinte de confinement (20),
- un bloc d'alimentation en produit lubrifiant (25),
- un coffret de commande électropneumatique (27), et
- au moins un pulvérisateur (22, 24),
**caractérisée en ce que** le pulvérisateur est conforme à l'une des revendications 1 à 8.

10. Installation selon la revendication 9, **caractérisée en ce que** le bloc (25) d'alimentation en produit lubrifiant est équipé d'une vanne (252) de coupure sélective à fréquence comprise entre 10 et 200 Hz, de l'alimentation du pulvérisateur (22, 24).

## Patentansprüche

1. Zerstäuber (22) zur Zerstäubung eines Schmiermittels entlang einer Zerstäubungsachse (Z-Z), umfassend:
- einen ersten Kanal für das Schmiermittel, der auf der Zerstäubungsachse zentriert ist,
- eine Düse (2242), die auf der Zerstäubungsachse (Z-Z) zentriert ist,
- einen Kern (2250), der koaxial im Inneren der Düse angeordnet ist,
- einen zweiten Kanal (2248) zum Ausstoßen eines ersten Luftstrahls, welcher um den ersten Kanal herum in einer gegenüber der Zerstäubungsachse (Z-Z) umlaufenden Richtung angeordnet ist und dem ersten Luftstrahl im Betrieb eine spiralförmige Richtung (F4) verleiht,
**dadurch gekennzeichnet, dass** der erste Kanal zwischen dem Kern (2250) und der Düse (2242) begrenzt und aus mehreren getrennten Kanalabschnitten (2260) gebildet ist und dass der Zerstäuber des Weiteren einen Ring (2258) umfasst, welcher den Kern (2250) zumindest teilweise umschließt, wobei die Kanalabschnitte (2260) für das Schmiermittel durch Nuten gebildet sind, die sich axial auf dem Umfang des Kerns oder an der Innenseite des Rings (2258) erstrecken.

2. Zerstäuber (22) nach Anspruch 1, **dadurch gekennzeichnet, dass** die Kanalabschnitte (2260) ein radiales Maß von weniger als 0,5 mm, vorzugsweise von circa 0,2 mm aufweisen.

3. Zerstäuber (22) nach einem der Ansprüche 1 und 2, **dadurch gekennzeichnet, dass** die Kanalabschnitte (2260) für das Schmiermittel gleichmäßig um die Zerstäubungsachse (Z-Z) herum verteilt sind.

4. Zerstäuber (22) nach einem der vorhergehenden Ansprüche, **dadurch gekennzeichnet, dass** die Kanalabschnitte (2260) dreieckig sind.

5. Zerstäuber nach einem der vorhergehenden Ansprüche, **dadurch gekennzeichnet, dass** der Zerstäuber einen dritten Kanal (V2242) zum Ausstoßen eines zweiten Luftstrahls umfasst, der zwischen dem Ring (2258) und der Düse (2242) angeordnet ist.

6. Zerstäuber nach Anspruch 5, **dadurch gekennzeichnet, dass** der dritte Kanal (V2242) rohrförmig ausgebildet ist, derart, dass er dem zweiten Luftstrahl im Betrieb eine axiale Richtung (F1) verleiht.

7. Zerstäuber nach einem der vorhergehenden Ansprüche, **dadurch gekennzeichnet, dass** der zweite Luftkanal durch Öffnungen (2248) gebildet ist, die gleichmäßig um die Zerstäubungsachse (Z-Z) herum verteilt sind und die dem ersten Luftstrahl (F4) im Betrieb eine Richtung verleihen (F4), die gegenüber der Zerstäubungsachse (Z-Z) eine axiale Komponente (F2) und eine orthoradiale Komponente (F3) aufweist.

8. Zerstäuber (22) nach einem der vorhergehenden Ansprüche, **dadurch gekennzeichnet, dass** der Zerstäuber des Weiteren ein elektrisch leitfähiges Element (2216) umfasst, das in Kontakt mit dem Schmiermittel angeordnet ist und im Betrieb des Zerstäubers unter Spannung steht.

9. Schmieranlage (2) zum Schmieren eines Teils (26), umfassend:
- ein geschlossenes Gehäuse (20),
- eine Einheit (25) zur Versorgung mit Schmiermittel,
- ein elektropneumatisches Steuergerät (27) und
- mindestens einen Zerstäuber (22, 24),
**dadurch gekennzeichnet, dass** der Zerstäuber nach einem der Ansprüche 1 bis 8 ausgebildet ist.

10. Schmieranlage nach Anspruch 9, **dadurch gekennzeichnet, dass** die Einheit (25) zur Versorgung mit Schmiermittel mit einem selektiven Absperrventil (252) zur Unterbrechung der Versorgung des Zerstäubers (22, 24) mit einer Frequenz zwischen 10 und 200 Hz versehen ist.

## Claims

1. An atomizer (22) of a lubricant product along a spraying axis (Z-Z), comprising:
- a first passage of the lubricant product which is centered on the spraying axis,
- a nozzle (2242), which is centered on the spraying axis (Z-Z),
- a core (2250) which is coaxially positioned inside the nozzle,
- a second passage (2248) for ejecting a first air jet, which is arranged around the first passage along a peripheral direction to the spraying axis (Z-Z), and which, during operation, imparts to the first air jet a helical direction (F4),
**characterized in that** the first passage is defined between the core (2250) and the nozzle (2242) and is formed with several disconnected passage sections (2260) and **in that** the atomizer further comprises a ring (2258) which at least partly clasps the core (2250), the passage sections (2260) of the lubricant being formed with the grooves axially extending on the periphery of the core.

2. The atomizer (22) according to claim 1, **characterized in that** the passage sections (2260) have a radial dimension of less than 0.5 mm, preferably of the order of 0.2 mm.

3. The atomizer (22) according to one of claims 1 and 2, **characterized in that** the passage sections (2260) of the lubricant product are regularly distributed around the spraying axis (Z-Z).

4. The atomizer (22) according to one of the preceding claims, **characterized in that** the passage sections (2260) are triangular.

5. The atomizer according to any previous claim, **characterized in that** it comprises a third passage (V2242) for ejecting a second air jet, which is positioned between the ring (2258) and the nozzle (2242).

6. The atomizer according to claim 5, **characterized in that** the third passage (V2242) is tubular so that, during operation, it gives the second air jet an axial direction (F1).

7. The atomizer according to one of the preceding claims, **characterized in that** the second air passage is formed with holes (2248) which are regularly distributed around the spraying axis (Z-Z) and which, during operation, give the first air jet a direction (F4) comprising an axial component (F2) and an ortho-radial component (F3) to the spraying axis (Z-Z).

8. The atomizer (22) according to one of the preceding claims, **characterized in that** it further comprises an electrically conducting element (2216) positioned in contact with the lubricant product and powered up during the operation of the atomizer.

9. A facility (2) for lubricating a part (26), comprising:
- a confinement chamber (20),
- a block for supplying a lubricant product (25),
- an electropneumatic control box (27), and
- at least one atomizer (22, 24),
**characterized in that** the atomizer is according to one of claims 1 to 8.

10. The facility according to claim 9, characterizing that the block for supplying a lubricant product (25) is equipped with a valve (252) for selectively cutting off, with a frequency comprised between 10 and 200 Hz, the power supply of the atomizer (22, 24).
